# EUROPÄISCHE PATENTANMELDUNG

(11) **EP 4 000 829 A1**
(43) Veröffentlichungstag der Anmeldung: **25.05.2022**
(21) Anmeldenummer: 21206395.2
(22) Anmeldetag: 04.11.2021
(51) Int. Cl.: B26D 7/32, B65G 43/08, B65G 47/22, B26D 5/00

(54) **VERFAHREN ZUM POSITIONIEREN EINES ZU TRANSPORTIERENDEN ARTIKELS SOWIE VORRICHTUNG ZUR DURCHFÜHRUNG DES VERFAHRENS**

(30) Priorität: 17.11.2020 DE 102020130342
(71) Anmelder: MULTIVAC Sepp Haggenmüller SE & Co. KG, 87787 Wolfertschwenden (DE)
(72) Erfinder: Stachel, Tom, 87439 Kempten (DE); Christian, Arend, 87700 Memmingen (DE)
(74) Vertreter: Weickmann & Weickmann PartmbB

(57) **Zusammenfassung**

Um bei einem Slicer (1) auf der Abförder-Einheit (17) hinsichtlich Quer-Position, Drehlage und ggfs. auch Falt-Zustand falsch liegende Artikel (A), also Scheiben oder Portionen, automatisch zu korrigieren, wird die Ist-Position möglichst weit stromaufwärts, vorzugsweise bereits auf dem Portionier-Band (17a) der Abföder-Einheit (17), ermittelt und abhängig davon mit einem - vorzugsweise stromabwärts nachfolgenden - Band (17b, c) der Abförder-Einheit (17) eine Lage-Veränderung hin zur Soll-Position vorgenommen. Detektions-Band (DB) und Verlagerungs-Band (VB) können auch das gleiche Band sein, was aber beim Portionier-Band kaum möglich ist. Auch das Wiege-Band (WB) kommt nur als Detektions-Band (DB), aber nicht als Verlagerungs-Band (VB) in Frage.

Das Ziel besteht darin, die Abförder-Einheit (17) möglichst kurz und mit einer möglichst geringen Anzahl von Förderern, insbesondere Bändern (17a, b, c), auszubilden, vorzugsweise mit nur drei, wovon das Wiege-Band (WB) oder das Portionier-Band (17a) als Detektions-Band (DB) genutzt wird und als Verlagerungs-Band (VB) das nächste Band, egal ob es an zweiter oder dritter Position angeordnet ist.

## Beschreibung

### I. Anwendungsgebiet

Die Erfindung betrifft Aufschneide-Maschinen, insbesondere sogenannte Slicer, mit denen in der Lebensmittelindustrie Stränge eines nur geringfügig kompressiblen Produktes wie Wurst oder Käse in Scheiben aufgeschnitten werden, und insbesondere deren Abförder-Einheit, mit der die abgetrennten Scheiben oder daraus zusammengestellte geschindelte oder gestapelte Portionen von der Schneideinheit abgefördert werden.

### II. Technischer Hintergrund

Da diese Stränge mit einem über ihre Länge gut formhaltigen und maßhaltigen, also im Wesentlichen konstanten, Querschnitt hergestellt werden können, werden sie Produkt-Kaliber oder nur Kaliber genannt. Für die Zwecke der vorliegenden Anmeldung soll der Begriff Kaliber jedoch sowohl solche Stränge mit über die Länge konstantem als auch nicht konstantem Querschnitt abdecken.

Dabei werden meist mehrere Produkt-Kaliber in mehreren Spuren nebeneinander gleichzeitig aufgeschnitten, indem vom gleichen Messer, welches sich in Querrichtung zur Längsrichtung der Produkt-Kaliber bewegt, in einem Durchgang jeweils eine Scheibe abgeschnitten wird.

Die Produkt-Kaliber werden von einem Zuförderer vorwärts geschoben in Richtung einer Schneideinheit und deren Messer, meist auf einem schräg nach unten gerichteten Zuförderer, und jeweils durch die Produkt-Öffnungen einer so genannten Schneidbrille geführt, an deren vorderen Ende das darüber hinaus vorstehende Teil des Produkt-Kalibers von dem Messer unmittelbar vor der Schneidbrille als Scheibe abgetrennt wird.

Die Artikel, also einzelne Scheiben oder Portionen, fallen in aller Regel auf eine Abförder-Einheit, mittels deren sie von der Schneideinheit abtransportiert werden und werden von dort meist an einen weiteren Förderer übergeben, der die Artikel zur nächsten Verarbeitungsstation, häufig eine Einlege-Maschine zum Einlegen der Artikel in die Mulden eines Tiefzieh-Bandes oder einzelner Schalen transportiert.

Da die Artikel hierfür eine korrekte in der Aufsicht betrachtete Drehlage - sofern es sich nicht um einzelne runde Scheiben handelt - als auch Querposition besitzen müssen, um vollständig in der Mulde positioniert werden zu können, ist es bekannt, bei Bedarf die Position der Artikel zu korrigieren.

Je später in Durchlaufrichtung eine solche Detektion erfolgt, umso besser ist in der Regel die optische Zugänglichkeit für eine Kamera, jedoch kann auch die Korrektur nur entsprechend spät durchgeführt werden, was wegen eines eventuell hierfür benötigten weiteren Förderers die Baulänge der Maschine unerwünschterweise vergrößert.

Hierfür ist zunächst eine Detektion der Ist-Position der Artikel notwendig, was beispielsweise berührungslos mittels einer von oben auf die Abförder-Einheit gerichteten Kamera, insbesondere einer digitalen Kamera, möglich ist, was beispielsweise aus der WO 2004/000512 A1 bekannt ist, die mit der Steuerung der Maschine zum Steuern der beweglichen Teile der Maschine signaltechnisch gekoppelt ist.

Unter einer Kamera soll dabei jede führungslos arbeitende, insbesondere optische, Einheit verstanden werden, mit der es möglich ist, die ist-Position der Artikel auf einer Auflagefläche, insbesondere einem Förderer, zu bestimmen.

Das stromaufwärts liegende, erste Band der Abförder-Einheit, das sogenannte Portionier-Band, ist sehr kurz, um seine Masse gering zu halten, da es zwischen dem Auftreffen der Scheibe einer Portion sehr schnell intermittierend beschleunigt und abgebremst werden muss.

Zusätzlich umfasst bei manchen Maschinen jedes Band der Abförder-Einheit, beispielsweise das Portionier-Band, in Querrichtung mehrere nebeneinanderliegende einzelne und einzeln ansteuerbare Bänder, um das Aufschneiden auf den einzelnen Spuren individuell steuern zu können.

Unter einem Band oder Förderband soll in diesem Zusammenhang jede Art von Förderer verstanden werden, bei dem die Artikel aufliegend auf einer bewegbaren Auflagefläche durch die Bewegung dieser Auflagefläche bewegt werden, seien es um mindestens zwei Umlenkwalzen umgelenkte, endlose Fördergurte eines Gurt-Förderbands, oder stattdessen viele in geringem Querabstand zueinander liegende endlose Förderriemen eines Riemen-Förderbands, oder einzelne, insbesondere unabhängig voneinander verfahrbare, Schlitten oder andere Arten von Förderern.

### III. Darstellung der Erfindung

### a) Technische Aufgabe

Es ist daher die Aufgabe gemäß der Erfindung, ein Verfahren zur Verfügung zu stellen, welches dieses Problem löst, ohne die Baulänge der Aufschneide-Maschine zu vergrößern sowie eine Aufschneide-Maschine, insbesondere einen Slicer, bereitzustellen, der in der Lage ist, dieses Verfahren durchzuführen.

### b) Lösung der Aufgabe

Diese Aufgabe wird durch die Merkmale der Ansprüche 1 und 10 gelöst. Vorteilhafte Ausführungsformen ergeben sich aus den Unteransprüchen.

Hinsichtlich des Verfahrens wird diese Aufgabe dadurch gelöst, indem die Ist-Position des Artikels auf der Abförder-Einheit nicht nur detektiert wird, vorzugsweise berührungslos detektiert wird, beispielsweise optisch mittels einer Kamera, sondern anschließend auch diese Ist-Position automatisch mit einer vorgegebenen Soll-Position verglichen wird und bei einer unzulässig hohen Abweichung von der Soll-Position automatisch, und zwar mittels des Teils, insbesondere des Förderers der Abförder-Einheit, auf dem der Artikel aufliegt, in die Soll-Position verlagert wird.

Dadurch besitzt der Artikel spätestens am Ende der Abförder-Einheit seine Soll-Position, sodass stromabwärts der Abförder-Einheit - egal ob dies eine selbstständige Einheit ist oder Bestandteil der Aufschneide-Maschine ist - weitere Förderer lediglich zum Verbringen zur nächsten Bearbeitungsstation für die Artikel benötigt werden, aber keine Förderer, die zusätzlich eine Positionsänderung durchführen können.

Dies hält die Bau-Länge der Aufschneide-Maschine bis einschließlich der Erreichung der richtigen Ist-Position der Artikel gering.

Vorzugsweise wird aus dem gleichen Grund die Ist-Position des Artikels bei Bedarf entweder direkt auf dem Band durchgeführt, auf dem auch die Ermittlung seiner Ist-Position durchgeführt wurde, also dem Detektions-Band, oder auf dem Band bzw. Förderer, stromabwärts davon, und insbesondere unmittelbar stromabwärts davon, durchgeführt. Auch dies kommt der Reduzierung der zugrunde.

Dabei ist zu berücksichtigen, dass in den meisten Fällen einer der Förderer der Abförder-Einheit ein Wiege-Band ist, und ein Wiege-Band in aller Regel nicht zum Verändern der Ist-Position des darauf liegenden Artikels in Querrichtung benutzt werden sollte.

Wenn also eine Abförder-Einheit nur drei Förderer umfasst, nämlich Portionier-Band, Abförder-Band und Übergabe-Band an die nächste Baugruppe, so kann trotz dieser Ausbildung des auf das Portionier-Band unmittelbar nachfolgenden zweiten Bandes, des Abförder-Bandes, als Wiege-Band noch innerhalb der Abförder-Einheit die gewünschte Soll-Position erreicht werden, indem zumindest das auf das Wiege-Band folgende Übergabe-Band als Verlagerungs-Band zum Verlagern des Artikels von der Ist-Position in die Soll-Position, zumindest in Querrichtung, ausgebildet ist.

Um dies zu erreichen, ist es vorteilhaft, die Detektion der Ist-Position möglichst weit stromaufwärts durchzuführen, vorzugsweise direkt auf dem Portionier-Band. Die Positions-Korrektur kann dann entweder auf dem unmittelbar nachfolgenden zweiten Band durchgeführt werden, sofern dies kein Wiege-Band ist oder auf dem dritten Band, falls das zweite Band ein Wiege-Band ist.

Aufgrund der Schrägstellung des Portionier-Bandes zur ebenfalls überhängenden Schneid-Brille hin ist die Einsichtnahme darauf für eine darüber befindliche Kamera unter Umständen schwierig.

Je nach Arbeitsauftrag und damit Schrägstellung des Portionier-Bandes oder auch generell kann es deshalb besser sein, die Detektion der Ist-Position auf dem zweiten Band, also dem Band nach dem Portionier-Band, durchzuführen, vor allem wenn dies ein Wiege-Band ist, denn dann steht dieses Band und damit der darauf befindliche Artikel zum Zwecke des Verwiegens in der Regel kurzzeitig still, sodass während dieses Stillstandes eine besonders genaue Detektion der Ist-Position in Querrichtung und / oder hinsichtlich der in der Aufsicht betrachteten Drehlage möglich ist. Dann jedoch sollte die Positions-Korrektur auf dem unmittelbar folgenden dann dritten und häufig auch letzten Band der Abförder-Einheit durchgeführt werden.

Sofern die Ermittlung der Ist-Position, beispielsweise mittels einer Kamera, wahlweise auf dem ersten Band oder zweiten Band stattfinden soll, sind entweder zwei Kameras notwendig, und eine Umschaltbarkeit von der einen auf die andere zu ermöglichen, oder stattdessen ein umschaltbarer Umlenkspiegel im Strahlengang zwischen der, insbesondere einzigen, Kamera und der Abförder-Einheit.

Da eine Detektion der Ist-Position auf dem Portionier-Band auch deshalb schwierig ist, da wegen der bis zum Auftreffen der letzten Scheibe einer Portion zum einen das Portionier-Band schwingen kann, zum anderen bewegliche Teile wie die heranfliegende Scheibe bis zum Ablegen der letzten Scheibe im Strahlengang der Kamera hineinreichen können, kann es sinnvoll sein, das, insbesondere optische, Abtasten nicht von oben, sondern von unten durchzuführen.

Dies kann beispielsweise mit Hilfe eines durchsichtigen Bandes sowie einer Kamera, die unter dem Obertrum, vorzugsweise zwischen Obertrum und Untertrum des Postionier-Bandes, positioniert ist, erreicht werden, wobei sich dann hierfür auch ein sogenannter Zeilen-Scanner gut eignet, dessen lichtempfindliche Fläche sehr lang und schmal, insbesondere nur eine Pixelbreite schmal, ist und sich mit seiner Haupterstreckungsrichtung quer unter dem Obertrum des Postionier-Bandes erstrecken kann.

Durch all diese Lösungen wird eine zuverlässige Erkennung der Ist-Position und eine vor Ende der Abförder-Einheit durchgeführte Positions-Korrektur ermöglicht.

Häufig ist die Ist-Position des Artikels hinsichtlich der in der Aufsicht betrachteten Drehlage nicht in der gewünschten Soll-Position.

Dann wird die Drehlage korrigiert, etwa indem Teile des Bandes, bei einem Riemen-Förderband nur einige Riemen davon, unterschiedlich schnell zum Rest des Bandes angetrieben wird, wodurch der darauf liegende Artikel um einen Drehwinkel um eine aufrechte Achse gedreht werden kann.

Vor allem wenn die Ist-Position sowohl hinsichtlich der Querposition als auch hinsichtlich der Drehlage verändert werden muss, eignen sich hierfür bevorzugt Riemen-Förderbänder, die aus einer Vielzahl schmaler nebeneinanderliegender und für die Veränderung der Drehlage separat gesteuert antreibbaren Riemen bestehen, wenn die stromabwärtigen Umlenkrollen für diese Riemen - zumindest gemeinsam, im Idealfall einzeln gesteuert - in Querrichtung verlagerbar sind, sodass sie schräg zur generellen Durchlaufrichtung durch die Maschine verlaufen und dadurch den Artikel auch in Querposition verlagern können, zumindest um einen Teil der Querversatz-Strecke zwischen den beiden Umlenkrollen.

Da eine nicht korrekte Ist-Position ihre Ursache meist im Schneidprozess hat, ist man bestrebt, die Ursache der Abweichung von der Soll-Position zu ermitteln, und vorzugsweise automatisch zu ermitteln, statt durch langwieriges manuelles Ermitteln oder versuchsweise Positionskorrektur viel Zeit zu verbringen.

Erfindungsgemäß wird deshalb aus der Art und dem Maß der Abweichung von der Soll-Position auf die Ursache geschlossen, wofür die Steuerung der Maschine entsprechend ausgebildet sein muss, was insbesondere dann möglich ist, wenn die Steuerung über eine künstliche Intelligenz verfügt.

Abhängig von der ermittelten Ursache kann dann die Steuerung den ursächlichen Parameter ändern.

So kann beispielsweise eine aufgrund Nachschleifen radial zu lang gewordene Schneidfläche am Messer dazu führen, dass die abgetrennte Scheibe zu lange am Messer haften bleibt und dadurch in eine geringfügig falsche Richtung abgeworfen wird.

Gleiches kann bei zu stark haftendem Material der Scheibe der Fall sein, beispielsweise, weil die Temperatur der Scheibe zu hoch ist oder die Biegsamkeit der Scheibe zu gering.

Dann oder auch bei anderen Ursachen kann die Steuerung entweder selbsttätig die Drehzahl des Messers ändern oder vom Bediener einen Messerwechsel fordern und insbesondere die andere Gestaltung des neuen Messers vorgeben und/oder das Ändern eines oder mehrerer Produktparameter der nächsten aufzuschneidenden Kaliber fordern.

Auf diese Art und Weise können auch von jeder Aufschneide-Situation diejenigen Parameter gespeichert werden, die zu einer korrekten Ist-Position geführt haben, und bei einem gleichen oder ähnlichen neuen Aufschneide-Auftrag auf diese Parameter von Anfang an zurückgegriffen werden.

Um solche Rückschlüsse ziehen zu können, ist es wichtig, dass möglichst viele der sowohl maschinenseitigen Maschinen-Parameter, als auch der produktseitigen Kaliber-Parameter bekannt sind oder ermittelt werden, weshalb zur Ermittlung die entsprechenden Sensoren an der Maschine vorhanden sein müssen, wenn eine solche automatische Ursachen-Ermittlung durchgeführt werden soll.

Dadurch können die Tot-Zeiten der Maschine, insbesondere die Einstell-Zeit der Maschine für ein neues Produkt, stark reduziert werden.

Eine korrekte Ist-Position der Scheibe ist vor allem dann schwierig zu erreichen, wenn die Scheibe nicht in einer Ebene liegend abgelegt wird, sondern als gefaltete Scheibe abgelegt wird, was bekannterweise durch Anordnen einer rotierenden Faltwelle im Fallweg der abgetrennten Scheibe erreicht wird, die während des Darauffallens der Scheibe nicht nur rotieren, sondern auch ihre Position dabei verändern kann.

In diesem Fall wird bei einer von der Soll-Form festgestellten abweichenden Ist-Form der gefalteten Scheibe, vor allem wenn die Abweichung in der Form der Faltung liegt, bei Überschreiten eines vorgegebenen Akzeptanz-Wertes die Drehzahl der Faltwelle und/oder die Position bzw. der Weg der Faltwelle während des Faltvorganges automatische geändert. Dies kann auch eine Änderung des Weges der Faltwelle über einen Teil der Zeit oder die gesamte Zeit des Faltvorganges sein.

Vorzugsweise wird dies bei einer mehrspurigen Aufschneide-Maschine für jede Spur separat durchgeführt, wenn separat ansteuerbare Faltwellen vorhanden sind.

Auf diese Art und Weise wird wiederum eine zeitaufwendige manuelle try and error-Suche des richtigen Faltvorganges vermieden.

Hinsichtlich der Aufschneide-Maschine mit den bekannten Grundkomponenten Schneid-Einheit, Zufuhr-Einheit für Kaliber, Abförder-Einheit zum Abfördern der abgetrennten Scheiben oder Portionen - die bekanntermaßen außer dem Portionier-Band mindestens einen weiteren Förderer umfasst - und bei zusätzlichem Vorhandensein einer Kamera zum Detektieren der Ist-Position der Scheibe oder Portion auf der Abförder-Einheit, muss die immer vorhandene Steuerung der Maschine dazu ausgelegt und bestimmt sein, das vorbeschriebene Verfahren durchzuführen, um die zum Verfahren dargelegten Vorteile zu erreichen.

Vorzugsweise ist die Kamera zum Detektieren der Ist-Position auf das erste und/oder das zweite Band der Abförder-Einheit gerichtet, auf das zweite Band vorzugsweise dann, wenn es sich dabei um ein Wiege-Band handelt.

Falls das zweite Band kein Wiege-Band ist, kann die Kamera entweder auf das Portionier-Band gerichtet sein und das zweite Band bereits als Verlagerungs-Band zum Verändern der Position des Artikels ausgebildet sein oder die Kamera ist auf dieses zweite Band ausgerichtet und mittels dieses Bandes, welches als Veränderungs-Band ausgebildet ist, wird auch sofort die Lageveränderung des Artikels durchgeführt.

Die Kamera ist vorzugsweise über dem jeweiligen Band angeordnet, könnte in Sondersituationen jedoch auch unter dem Obertrum, welches dann vorzugsweise durchsichtig sein muss, angeordnet und insbesondere als Kamera mit in Durchlaufrichtung nur geringer Erstreckung, insbesondere als Zeilen-Kamera, ausgebildet sein.

Die Ausbildung als Zeilen-Kamera ist vorzugsweise dann sinnvoll, wenn das Verlagerungs-Band nicht das Detektions-Band ist, sondern ein demgegenüber nachgelagertes Band.

Vorzugsweise weist die Aufschneide-Maschine Sensoren auf, die mit der Steuerung datentechnisch verbunden sind.

Die Sensoren sollten in der Lage sein, Maschinen-Parameter zu ermitteln, etwa
- die Drehzahl des Messers
   und/oder
- die Lage der Messerachse in den beiden Querrichtungen zur Durchlaufrichtung
   und/oder
- die Umfangskontur des Messers
   und/oder
- den Schneidwinkel des Messers
   und/oder
- die radiale Länge der Schneidfläche des Messers.

Ebenso können Sensoren vorhanden sein, um Kaliber-Parameter zu ermitteln, vorzugsweise stromaufwärts der Schneid-Einheit, beispielsweise
- die Kerntemperatur des Kalibers
   und/oder
- die Oberflächen-Temperatur des Kalibers
   und/oder
- die Biegesteifigkeit des Kalibers, insbesondere um eine in der ersten Querrichtung liegende Biegeachse
   und/oder
- den Salzgehalt des Kalibers
   und/oder
- die elektrische Leitfähigkeit des Kalibers, die aus dessen Wassergehalt ableitbar ist.

Für die Querverlagerung kann ein Verlagerungs-Band in einer insgesamt gesteuert und quer verlagerbaren Band-Kassette aufgenommen sein, die vorzugsweise mittels eines einfachen Kurbeltriebes in Querrichtung verlagerbar ist.

Eine andere Möglichkeit besteht darin, dass es sich bei dem Band um ein Riemen-Förderband handelt, dessen stromabwärtige Umlenkrollen in Querrichtung verlagerbar sind, vorzugsweise einzeln und unabhängig voneinander, wodurch die Querposition eines darüber transportierten Artikels verändert werden kann.

Falls die Laufgeschwindigkeit der Riemen zusätzlich auch einzeln und unabhängig voneinander gesteuert werden kann, kann damit auch die Drehlage des darauf liegenden Artikels verändert werden.

Falls die Aufschneide-Maschine eine Falt-Einheit mit einer sowohl gesteuert verlagerbaren als auch rotierbaren Falt-Welle umfasst, sollte die Kamera so ausgebildet und angeordnet sein, dass sie in der Lage ist, auch die Falt-Form der gefalteten Scheibe zu ermitteln und die Steuerung so ausgebildet sein, dass sie diese gefaltete Ist-Form mit einer gefalteten Soll-Form vergleichen kann, was insbesondere mittels künstlicher Intelligenz in der Steuerung lösbar ist.

Ausgehend von der festgestellten Diskrepanz kann dann die Steuerung - wenn die Diskrepanz über einen vorgegebenen Akzeptanz-Wert liegt - automatisch die Falt-Welle während des Falt-Vorganges anders steuern, sodass die Ist-Form danach der Soll-Form entspricht.

Vorzugsweise sollte die Falt-Einheit auf jeder Spur separat so ausgebildet sein bei einer mehrspurigen Aufschneide-Maschine.

### c) Ausführungsbeispiele

Ausführungsformen gemäß der Erfindung sind im Folgenden beispielhaft näher beschrieben. Es zeigen:
- **Figuren 1a, b:**: eine Aufschneide-Maschine in Form eines Slicers gemäß dem Stand der Technik in unterschiedlichen perspektivischen Ansichten,
- **Figuren 1c:**: die Aufschneide-Maschine der **Figuren 1a****, b** in der Seitenansicht,
- **Figuren 2a:**: einen vereinfachten vertikalen Längsschnitt durch die Aufschneide-Maschine der **Figuren 1a** - **c,** also in gleicher Blickrichtung wie **Figur 1c****,** in dem die verschiedenen Förderbänder besser zu erkennen sind, mit in die Aufschneidestellung hochgeklapptem Zufuhrband,
- **Figuren 2b:**: einen Längsschnitt gemäß **Figur 2a****,** aber mit in die Beladestellung herabgeklapptem Zufuhrband und fortgeschrittenem Aufschneidezustand des Produkt-Kalibers,
- **Figur 3:**: eine erfindungsgemäße Abförder-Einheit in der Seitenansicht,
- **Figur 4a, b:**: zwei verschiedene Bauformen einer erfindungsgemäßen-Einheit in der Aufsicht von oben.

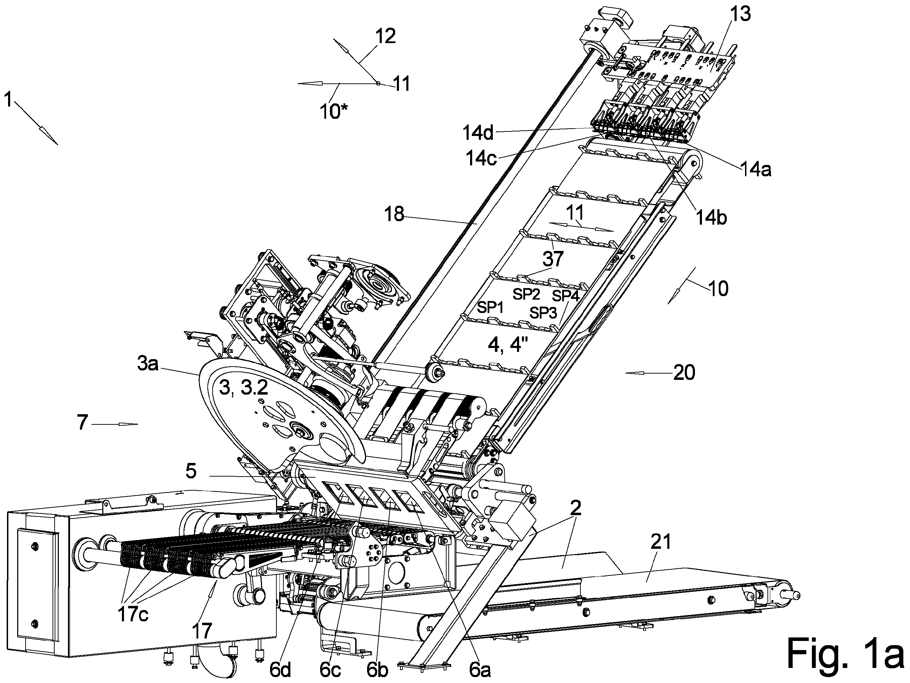

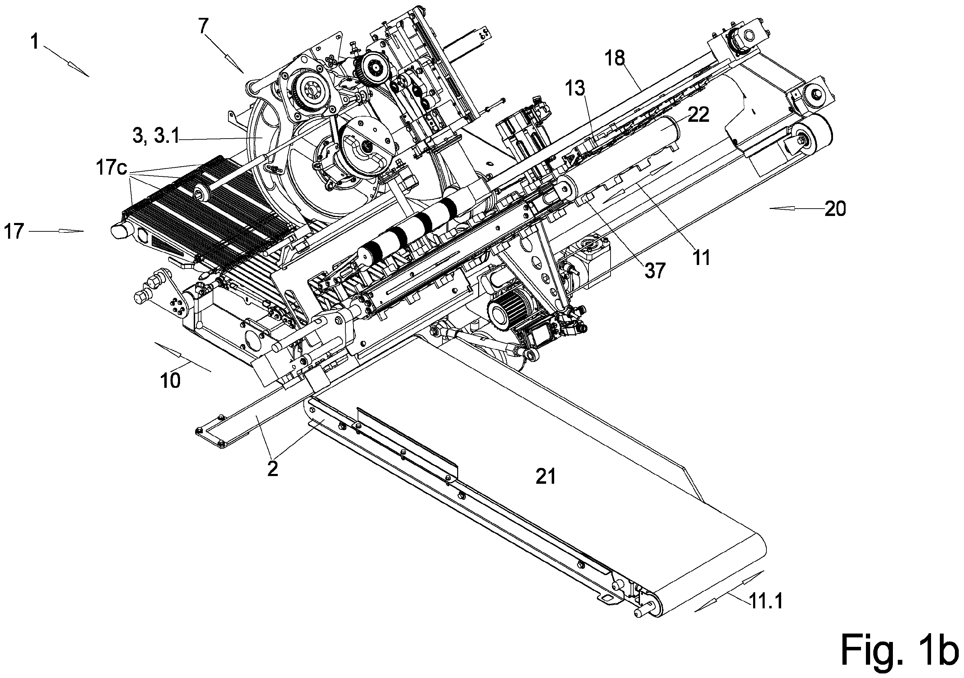

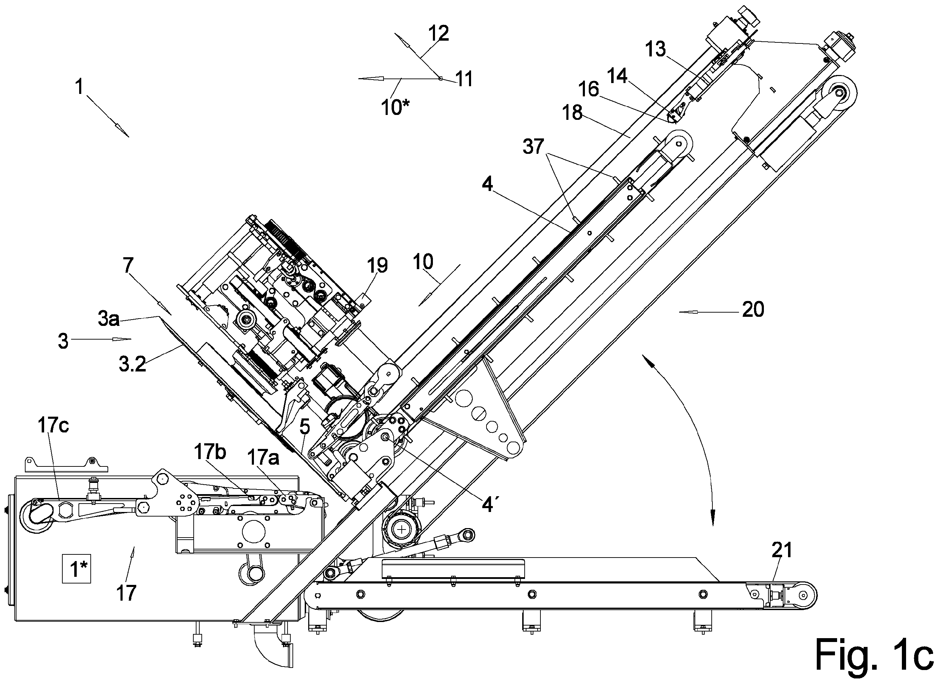

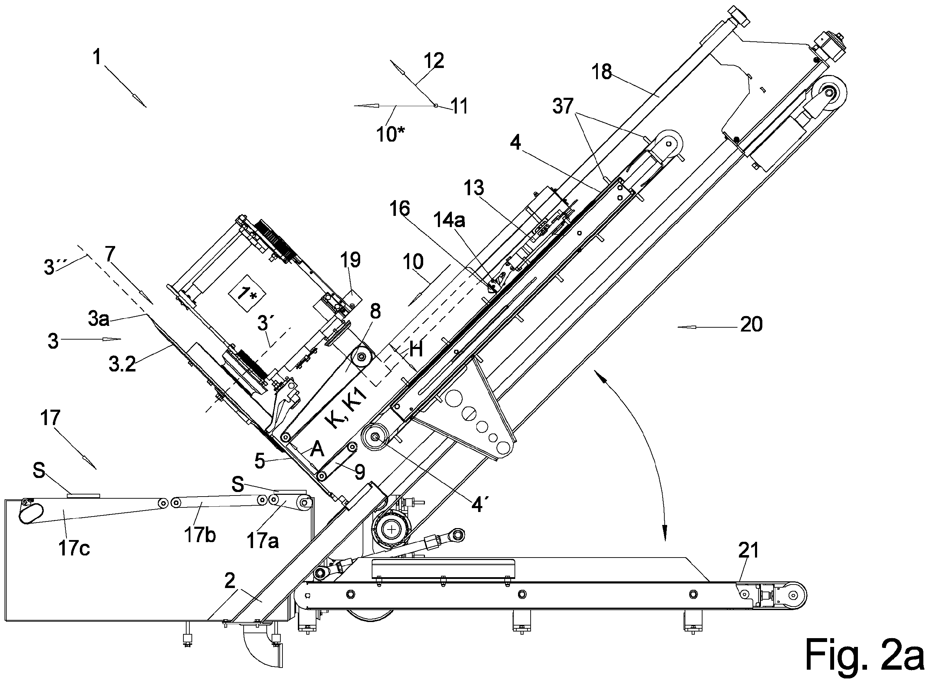

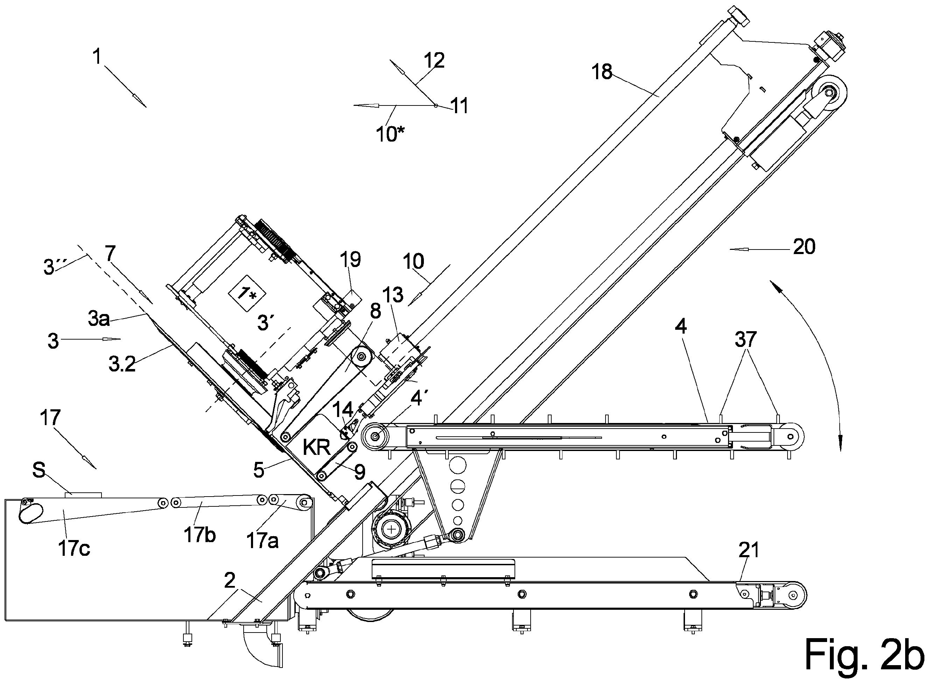

Die **Figuren 1a****,** **1b** zeigen unterschiedliche perspektivische Ansichten eines Slicers 1 zum gleichzeitigen Aufschneiden von mehreren - nur in den **Figuren 2a****, b** dargestellten - Produkt-Kalibern K nebeneinander und Ablegen in geschindelten Portionen P aus je mehreren Scheiben S, oder nur einzelner Scheiben S, wie in **Figur 2b** dargestellt mit einer generellen Durchlaufrichtung 10* durch den Slicer 1 von links nach rechts sowie **Figur 1c** eine Seitenansicht dieses Slicers 1.

**Figur 2a** zeigt einen - durch Weglassen seitlicher Abdeckungen besser verständlichen - Vertikalschnitt durch einen solchen Slicer 1 mit gleicher Blickrichtung wie **Figur 1c****.**

Der Grundaufbau des Slicers 1 besteht darin, dass einer Schneideinheit 7 mit einem rotierenden Sichelmesser 3 in diesem Fall vier quer zur Zufuhrrichtung 10 nebeneinanderliegende Produkt-Kaliber K von einer Zufuhreinheit 20 zugeführt werden, von deren vorderen Enden das rotierende Sichelmesser 3 jeweils bei einer Umdrehung, also quasi gleichzeitig, eine Scheibe S abtrennt.

Die Zufuhreinheit 20 umfasst einen Zuförderer 4 in Form eines endlosen, umlaufenden Zufuhr-Bandes 4, dessen Obertrum zumindest in Zufuhrrichtung 10, vorzugsweise auch entgegen hierzu antreibbar ist. Die Kaliber K liegen auf dem Zufuhr-Band 4 auf und sind in Querrichtung 11 durch Abstandhalter 15 positioniert, die vom Zufuhr-Band 4 nach radial außen abstehen.

Für das Aufschneiden der Produkt-Kaliber K befindet sich der Zuförderer 4 in der in den **Figuren 1a** - **c** sowie **Figur 2a** dargestellten Schrägstellung mit tiefliegendem schneidseitigem, vorderen Ende und hochliegendem, hinteren Ende, aus der er um eine in seiner Breitenrichtung, der 1. Querrichtung 11, verlaufende Schwenkachse 20', die sich in der Nähe der Schneideinheit 7 befindet, herabgeklappt werden kann in eine etwa horizontale Beladestellung gemäß **Figur 2b****.**

Das hintere Ende eines in der Zufuhreinheit 20 liegenden Kalibers K ist jeweils von einem Greifer 14a - d formschlüssig mit Hilfe von Greiferklauen 16 gehalten. Diese Greifer 14a - 14d sind an einer gemeinsamen Greifer-Einheit 13 befestigt, welche entlang einer stangenförmigen Greifer-Führung 18 in Zufuhrrichtung 10 verfahren werden kann.

Dabei ist sowohl der Vorschub der Greifer-Einheit 13 als auch der Zuförderer 4 gesteuert antreibbar, wobei jedoch die konkrete Zufuhrgeschwindigkeit der Kaliber K durch eine sogenannte obere und untere, angetriebene Produkt-Führung 8, 9 bewirkt wird, die an der Oberseite und Unterseite der aufzuschneidenden Kaliber K in deren vorderen Endbereichen nahe der Schneideinheit 7 angreifen:
Die vorderen Enden der Kaliber K sind jeweils durch eine für jedes Kaliber vorhandene Brillenöffnung 6a - d geführt, die in einer plattenförmigen Schneidbrille 5 ausgebildet sind. Unmittelbar vor der vorderen, schräg nach unten weisenden Stirnfläche der Schneidbrille 5 verläuft die Schneidebene 3", in der das Sichelmesser 3 mit seiner Schneidkante 3a rotiert und damit den Überstand der Kaliber K aus der Schneidbrille 5 als Scheibe S abtrennt. Die Schneidebene 3" wird von den beiden Querrichtungen 11, 12 aufgespannt.

Dabei dient der Innenumfang der Brillenöffnungen 6a - d der Schneidkante 3a des Messers 3 als Gegenschneide.

Häufig sind die beiden Produktführungen 8, 9 in der 1. Querrichtung 11 separat für jedes Kaliber K vorhanden und separat ansteuerbar.

Die obere Produktführung 8 kann in der zweiten Querrichtung 12 - die lotrecht zur Fläche des Obertrums des in die Aufschneidestellung hochgeklappten Zuförderers 4 verläuft - verlagerbar sein zur Anpassung an die Höhe H des Kalibers K in dieser Richtung. Ferner kann mindestens eine der Produktführungen 8, 9 um eine ihrer Umlenkrollen 8a, 8b, 9a, 9b verschwenkbar ausgebildet sein, um die Richtung des am Kaliber K anliegenden Trumes ihres Förderbandes begrenzt verändern zu können.

Die schräg im Raum stehenden, gerade abgetrennten, Scheiben S fallen auf eine unterhalb der Schneidbrille 5 beginnende Abförder-Einheit 17, die in diesem Fall aus in Durchlaufrichtung 10* mehreren mit ihren Obertrumen etwa fluchtend hintereinander angeordneten Abförderern 17a, b, c besteht.

Unterhalb der Zuförder-Einheit 20 befindet sich ein etwa horizontal verlaufender Resteförderer 21 ebenfalls in Form eines endlos umlaufenden Förderbandes, welcher mit seinem vorderen Ende unterhalb der Schneidbrille 5 und unmittelbar unter oder hinter der Abförder-Einheit 17 beginnt und mit seinem Obertrum darauf fallende Reste von dort aus entgegen der Durchlaufrichtung 10* nach hinten abtransportiert.

Deshalb kann zumindest der in Durchlaufrichtung 10* erste Förderer 17a mit seinem Obertrum entgegen der Durchlaufrichtung 10* angetrieben werden, sodass ein darauf fallendes z.B. Reststück nach hinten transportiert werden kann und auf den tiefer liegenden Reste-Förderer 21 fällt.

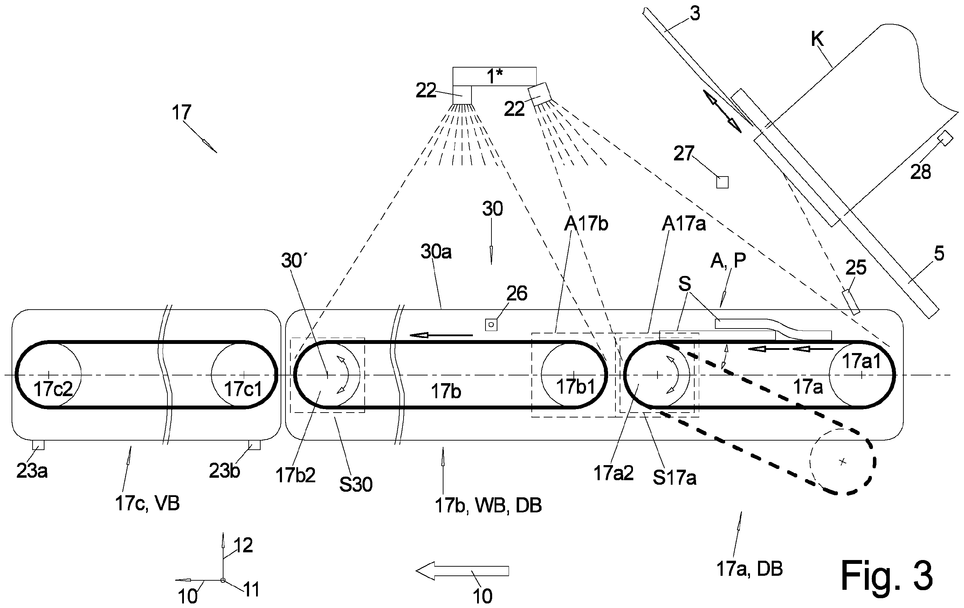

**Figur 3** zeigt in der Seitenansicht nur die Abförder-Einheit 17 der Aufschneide-Maschine 1 in einer erfindungsgemäßen Ausführungsform:
Dabei sind in der Transportrichtung 10, in der die Artikel A - hier eine Portion P aus lediglich zwei geschindelten Scheiben S - abgefördert werden sollen, hintereinander drei Abförder-Bänder 17a, b, c vorhanden, jeweils endlos umlaufende Bänder, die über je eine in Transportrichtung 10 stromaufwärtige Umlenkwalze 17a1, 17b1, 17c1 sowie eine stromabwärtige Umlenkwalze 17a2, 17b2, 17c2 umlaufen und auf deren Obertrumen der Artikel A aufliegt zum Abtransport und zur Übergabe an den jeweils nächsten Förderer. Dabei sind in der Realität der zweite und der dritte Förderer 17b, 17c in Transportrichtung 10 wesentlich länger als der erste Förderer 17a.

Wie im rechten Bereich dargestellt, wird der aus der schräg stehenden Schneidbrille 5 nach unten vorstehende Überstand des Kalibers K mittels des Messers 3, das eng entlang der Unterseite der Schneidbrille 5 entlang bewegt wird, abgetrennt und die Scheiben S fallen nacheinander auf das Portionier-Band 17a, welches zum Erzeugen einer in Längsrichtung, der Transportrichtung 10, geschindelten Portion P schrittweise nach dem Auftreffen je einer Scheibe S einen Schritt weiter gefahren wird.

Ist der zu erzeugende Artikel A, in diesem Fall die Portion P, auf dem Portionier-Band 17a fertig hergestellt, wird dieses in Gang gesetzt und der Artikel A übergeben an das nachfolgende Abförder-Band 17b, welches in diesem Fall als Wiege-Band WB ausgebildet ist und eine nicht dargestellte Waage umfasst, um den Artikel A darauf zu verwiegen, wofür das Abförder-Band 17b in der Regel kurz angehalten wird.

Danach wird durch Antreiben des Abförder-Bandes 17b der Artikel A übergeben an den nächsten Förderer, den Übergabe-Förderer 17c, dessen Aufgabe hauptsächlich in der Übergabe des Artikels A an einen nachfolgenden Förderer einer anderen Bearbeitungs-Einheit besteht.

Wie ersichtlich sind die beiden ersten Förderer 17a, 17b meist in einer Schwenk-Einheit 30 befestigt und gelagert, meist in deren Schwenkrahmen 30a, der in der Regel um eine nahe seines stromabwärtigen Endes angeordnete SchwenkAchse 30' - die hier mit der Rotationsachse der stromabwärtigen Umlenkwalze 17b2 des Abförderers 17b übereinstimmt - verschwenkbar ist um vor allem den Winkel und den Abstand in der Höhe des Portionier-Bandes 17a gegenüber der Schneidbrille 5 und damit die Fallstrecke für die Scheiben S nach Bedarf festzulegen.

Aus dem gleichen Grund ist meist zusätzlich das Portionier-Band 17a verschwenkbar um eine in Querrichtung 11 laufende Schwenkachse, die meist identisch mit der Rotationsache der stromabwärtigen Umlenkwalze 17a2 des Portionier-Band 17a ist, gegenüber dem Schwenkrahmen 30a.

Der Antrieb des Portionier-Bandes 17a, also seines Förderbandes, wird über einen Antriebsmotor A17a realisiert, der hier koaxial auf der Rotationsachse der stromabwärtigen Umlenkwalze 17a2 angeordnet ist, und ebenfalls koaxial dazu kann der Schwenkmotor S17a angeordnet sein, der das Verschwenken des Portionier-Bandes 17a gegenüber dem Schwenkrahmen 30a bewirkt.

Das Verschwenken der gesamten Schwenk-Einheit 30 erfolgt mittels eines Schwenk-Motors S30, der koaxial zur Schwenkachse und damit der stromabwärtigen Umlenkwalze 17b2 angeordnet ist, während der Antriebsmotor A17b für das Förderband des Abförderers 17b koaxial zur anderen Umlenkwalze 17b1 des Abförderers 17b angeordnet ist.

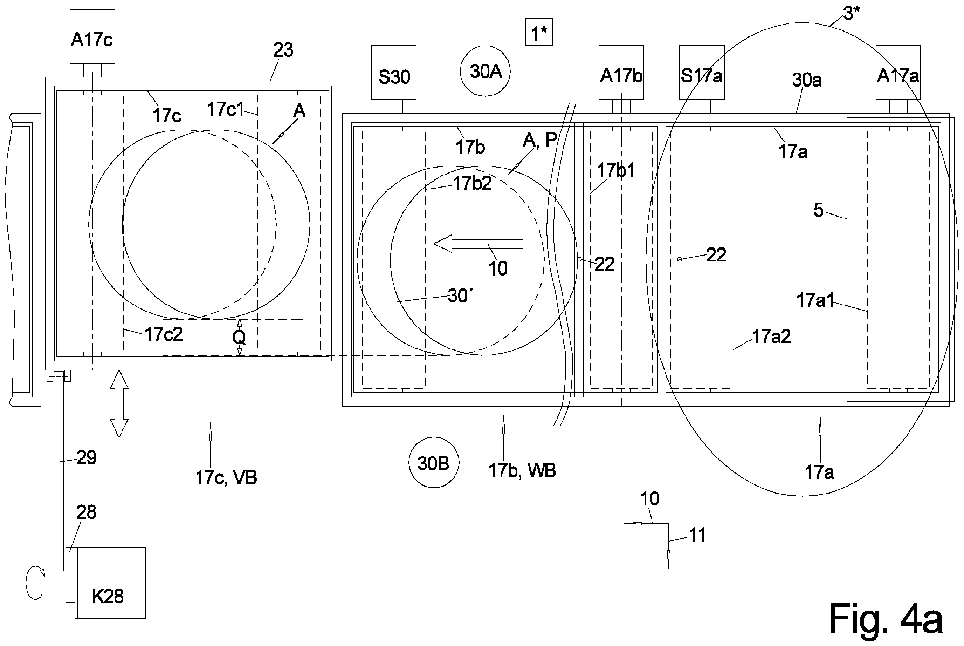

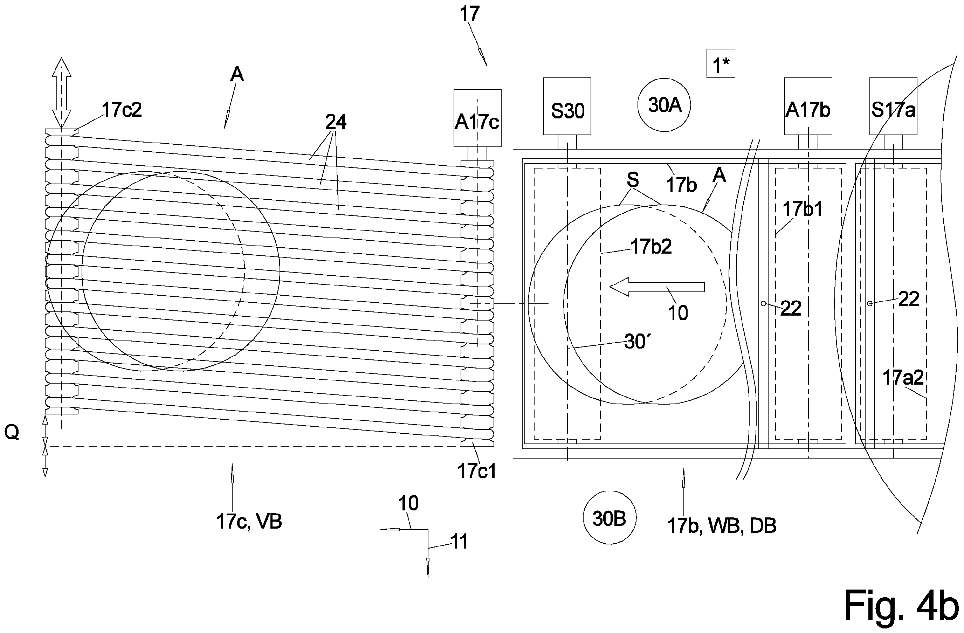

Die erfindungsgemäße Besonderheit besteht zunächst darin, dass über der Abförder-Einheit 17 eine Kamera 22 angeordnet ist - von denen in **Figur 3** zwei Stück an alternativen Positionen dargestellt sind - und die datentechnisch mit der Steuerung 1* der Aufschneide-Maschine 1 gekoppelt sind, und mit denen die Ist-Lage des Artikels A in Querrichtung 11 auf dem jeweiligen Band 17a oder 17b aufgenommen und detektiert werden soll, wie am besten in den Aufsichten der alternativen Lösungen der **Figuren 4a****,** **4b** zu erkennen.

Während eine Kamera 22, die diese Ist-Position auf dem Abförderer 17b, also dem mittleren der drei Bänder, aufnehmen soll, mittig darüber angeordnet werden kann, ist dies bei einer Detektion auf dem Portionier-Band 17a wegen der schräg überhängenden Schneidbrille 5 und dem Messer 3 - dessen Flugkreis 3* in den Figuren 4a, b eingezeichnet ist - nicht möglich, sodass eine solche Kamera 22 über dem stromabwärtigen Ende oder in Transportrichtung 10 sogar stromabwärts des Portionier-Bandes 17a in der Höhe darüber angeordnet werden muss.

Eine solche Kamera, die hier rechts eingezeichnet ist, hat einen entsprechend schrägen Blickwinkel auf das Portionier-Band 17a, erst recht, wenn dieses mit seinem stromaufwärtigen Ende herabgeklappt ist, um den Winkel zwischen Schneidbrille 5 und Obertrum des Portionier-Bandes 17a zu verringern. Diese schräge Betrachtung erschwert die Auswertung und die Genauigkeit der Auswertung der Ist-Position des Artikels A, weshalb bevorzugt das mittlere Band, also das Abförder-Band 17b, vor allem wenn es als Wiege-Band WB ausgebildet ist, auch als Detektions-Band DB zum Ermitteln der Ist-Position des Artikels darauf benutzt wird.

Bei einer Abweichung der Ist-Position von der gewünschten Soll-Position in Querrichtung 11, jedenfalls stärker als ein vorgegebener Toleranzwert, wird diese Ist-Position korrigiert, gemäß **Figur 4a** mittels des letzten der drei Bänder der Abförder-Einheit 17, dem Übergabe-Band 17c:
Dessen Umlenkwalzen 17c1, 17c2 sind als eine erste Lösung in einer sogenannten Band-Kassette 23, meist einem in der Aufsicht betrachtet umlaufenden Rahmen, gelagert, und auch der Antriebsmotor A17c für dieses Förderband ist an diesem Rahmen der Band-Kassette 23 befestigt.

Die gesamte Band-Kassette 23 kann gesteuert um einen gewünschten Betrag in Querrichtung 11 verlagert werden, beispielsweise entlang von Führungen 23a, b gemäß **Figur 3****,** die in Querrichtung 11 verlaufen, wobei als Querantrieb ein Kurbeltrieb 28+29 verwendet werden kann mit einer Kurbel 28, die von einem Kurbel-Motor K28 angetrieben um eine Kurbelachse 28' schwenkbar ist, welche quer zur beabsichtigten Verlagerungsrichtung der Band-Kassette 23, hier der Querrichtung 11, verläuft. Zwischen der Band-Kassette 23 einerseits und der Kurbel 28 andererseits, dort beanstandet zu deren Kugel-Achse 28', ist ein Verbindungshebel 29 mit seinen Enden gelenkig befestigt.

Wenn also in der Aufsicht der **Figur 4a** betrachtet der Artikel A hier in Form einer Portion P in Querrichtung 11 in Transportrichtung 10 zu weit links lag um eine Querstrecke Q, so wird die Band-Kassette 23, sobald sich der Artikel A darauf befindet, um diese Querstrecke Q in die gewünschte Querrichtung 11 verfahren, sodass sich der Artikel A in Querrichtung 11 in der Soll-Position bzgl. des Grundgestells 2 des Slicers 1 befindet. In dieser quer ausgelenkten Position der Band-Kassette 23 erfolgt dann die Übergabe des Artikels A an eine angedeutete nachfolgende Transport-Einheit.

Das gleiche Ziel wird erreicht mit der ebenfalls in einer Aufsicht in **Figur 4b** dargestellten zweiten Lösung, bei der der Übergabe-Förderer 17c - vom Portionier-Band 17a ist aus Platzgründen lediglich noch der stromabwärtige Teil dargestellt - wiederum als Verlagerungs-Band VB eingesetzt wird, aber im Gegensatz zu den Gurt-Förderbändern der **Figur 4a** dieser letzte Übergabe-Förderer 17c ein Riemen-Förderer ist mit in der Aufsicht betrachtet einer Vielzahl von in Querrichtung 11 nebeneinander in jeweils vertikal stehenden Umlaufebenen umlaufenden Riemen 24, meist Rund-Riemen mit rundem Querschnitt, wobei die Umlenkwalzen 17c1, 17c2 in Querrichtung 11 beabstandet vorzugsweise für jeden Riemen 24 eine entsprechend gestaltete Umfangsnut aufweisen, die die Riemen 24 in Querrichtung 11 positioniert und auch bei einer leichten Schrägstellung der Rotationsachse der entsprechenden Umlenkwalze zur Umlaufebene des jeweiligen Riemens 24 diesen in der Umfangsnut hält.

Wenn hierbei die stromabwärtige Umlenkwalze 17c2 in Querrichtung 11 gesteuert verfahrbar ist - wofür ein Kurbeltrieb 28+29, wie er in Figur 4a beschrieben ist, verwendet werden kann - wird ein auf dem Riemen-Förderer liegender Artikel A nicht exakt in Förderrichtung 10 gefördert, sondern in der Aufsicht betrachtet leicht schräg hierzu.

War die Soll-Position des Artikels A auf dem Detektions-Band DB, hier dem mittleren Abförder-Band 17b, um die Querstrecke Q abweichend von der Soll-Position, so wird für die Korrektur der Lage des Artikels die stromabwärtige Umlenkwalze 17c2 in der entsprechenden Richtung um diese Querstrecke Q ausgelenkt und bleibt in dieser Stellung während der Zeit, in der sich der Artikel A auf diesem Übergabe-Förderer 17c befindet.

Wie in **Figur 4a** **und** **4b** ersichtlich sind alle antreibenden Motore der-Einheit 17 wenn möglich auf der von der Bediener-Seite 30B, auf der sich in aller Regel der Bediener des Slicers 1 befindet und dessen Funktion kontrolliert, abgewandten Antriebs-Seite 30A angeordnet.

Ferner kann mit dem Riemen-Förderband 17c gemäß **Figur 4b** auch eine Drehung eines Artikels A um die Hochachse durchgeführt werden, um dessen Ausrichtung in eine Soll-Drehlage zu verändern:
Hierfür werden während des Transports entlang des Riemen-Förderers 17c die einzelnen Riemen 24 - einzeln oder gruppenweise - unterschiedlich schnell angetrieben, um dadurch den darauf liegenden Artikel A zu drehen.

Wenn beispielsweise die in **Figur 4b** oberen dargestellten Riemen 24, auf denen der in Förderrichtung 10 rechte Rand des Artikels A aufliegt, schneller laufen als die unteren Riemen 24, auf denen der linke Rand des Artikels A aufliegt, so wird der Artikel A dadurch entgegen dem Uhrzeigersinn gedreht.

Dann jedoch ist ein einziger Antriebsmotor A17c - wie dargestellt - z.B. für die gesamte antreibende Umlenkwalze z.B. 17c1 nicht ausreichend, sondern die einzelnen Riemen oder Gruppen von Riemen müssen hierfür separat antreibbar sein und hierfür über einen separaten Antriebsmotor verfügen.

Ferner sind in den **Figur 3** diverse Sensoren eingezeichnet, um möglichst viele Parameter, vorzugsweise das Kaliber K betreffende Parameter, zu ermitteln:
So kann mittels eines Sensors 25- der sich beispielsweise am Grundgestell der Maschine befinden kann - die Temperatur der Stirnfläche des aufzuschneidenden Kalibers K gemessen werden. Vor dem Anschneiden des Kalibers K ist dies die Oberflächen-Temperatur, und nach dem Abtrennen der ersten Zentimeterwenn dies schnell genug vonstattengeht - die Kerntemperatur des Kalibers K. Die Temperatur beeinflusst die Haftfähigkeit der Scheiben S am Messer 3 und auch die Biege-Steifigkeit der Scheiben es und damit auch die Form der Scheibe S beim Auftreffen auf dem Portionier-Band 17a und insbesondere das Ergebnis des Scheiben-Faltvorganges, sofern ein solcher durchgeführt wird.

Ein Sensor 26, dessen Messrichtung eine etwa horizontale Querrichtung ist, kann zu diesem Zweck die Form der Faltung einer gefalteten, auf dem in diesem Fall mittleren Förderer 17b liegenden, gefalteten Scheibe es detektieren und mit einer Soll-Form einer gefalteten Scheibe es vergleichen.

Mit gleicher Blickrichtung kann ein Sensor 27 mit seiner Detektionsrichtung in Querrichtung 11 knapp unterhalb der Schneidbrille 5 im Abwurf-Weg der Scheiben S angeordnet sein, der in der Seitenansicht die Biegung der herabfallenden Scheiben detektiert, woraus ebenfalls auf die Biege-Steifigkeit dieser Scheibe S geschlossen werden kann.

Um den Salzgehalt des Kalibers und / oder die elektrische Leitfähigkeit des Kalibers und hieraus den Wassergehalt zu ermitteln, ist meist ein das Kaliber K kontaktierender Sensor 28 notwendig, der in der Zufuhr-Einheit 20 für die Kaliber K angeordnet sein kann, beispielsweise in der Lücke zwischen der angetriebenen unteren Produktführung 9 und dem Zufuhr-Förderer 4, die in **Figur 3** jedoch nicht dargestellt sind.

### BEZUGSZEICHENLISTE

- 1: Aufschneide-Maschine, Slicer
- 1*: Steuerung
- 2: Grundgestell
- 3: Messer
- 3: Rotationsachse
- 3": Messerebene, Schneidebene
- 3*: Flugkreis
- 3a: Schneidkante
- 4: Zuförderer, Zufuhr-Band
- 5: Schneidbrille
- 6a - d: Brillen-Öffnung
- 7: Schneideinheit
- 8: obere Produktführung, oberes Führungsband
- 9: untere Produktführung, unteres Führungsband
- 10: Durchlaufrichtung, Transportrichtung
- 10*: Durchlaufrichtung durch Maschine
- 11: 1. Querrichtung (Breite Slicer)
- 12: 2. Querrichtung (Höhen-Richtung Kaliber)
- 13: Greifer-Einheit, Greifer-Schlitten
- 14,14 a - d: Greifer
- 15: Quersteg
- 15': Auflagefläche
- 16: Greifer-Klaue
- 17: Abförder-Einheit
- 17a, b, c: Portionierband, Abförderer
- 17a1, 17a2: Umlenkwalze
- 17b1, 17b2: Umlenkwalze
- 17c1, 17c2: Umlenkwalze
- 18: Greifer-Führung
- 19: Höhen-Sensor
- 20: Zufuhreinheit
- 21: Reststück-Förderer
- 22: Kamera
- 23: Band-Kassette
- 23a, b: Führung
- 24: Riemen
- 25: Sensor
- 26: Sensor
- 27: Sensor
- 28: Kurbel
- 28': Kurbel-Achse
- 29: Verbindungshebel
- 30: Schwenkeinheit
- 30': Schwenkachse
- 30a: Schwenkrahmen

- A: Artikel
- K: Produkt, Produkt-Kaliber
- KR: Reststück
- S: Scheibe
- P: Portion
- Q: Querstrecke
- DB: Detektionsband
- VB: Verlagerungsband
- WB: Wiegeband
- A17a, b, c: Antriebs-Motor
- K28: Kurbel-Motor
- S17a, c: Schwenk-Motor
- S30: Schwenk-Motor

## Patentansprüche

1. **Verfahren** zum Positionieren eines Artikels (A), insbesondere einer Scheibe (S) oder einer Portion (P) aus mehreren geschindelten oder gestapelten Scheiben (S), insbesondere in Querrichtung (11) zur Transportrichtung (10) einer Abförder-Einheit (17), die insbesondere Teil einer Aufschneide-Maschine (1) wie etwa einem Slicer (1) ist
indem
- die Ist-Position des Artikels (A) auf der Abförder-Einheit (17) detektiert wird,
**dadurch gekennzeichnet, dass**
- die Ist-Position automatisch mit einer vorgegebenen Soll-Position verglichen wird,
- bei einer Diskrepanz, die über einem vorgegebenen Akzeptanz-Wert liegt, der Artikel (A) automatisch mittels des Teils der Abförder-Einheit (17), auf dem er aufliegt, in die Soll-Position verlagert wird.

2. Verfahren nach Anspruch 1,
**dadurch gekennzeichnet, dass**
die Detektion der Ist-Position berührungslos, insbesondere optisch, erfolgt. (Verlagerungsstelle:)

3. Verfahren nach einem der vorhergehenden Ansprüche, wobei
- die Abförder-Einheit (17) mehrere Bänder (17a, b, c) umfasst, **dadurch gekennzeichnet, dass**
die Ist-Position des Artikels (A) auf und mittels dem Förderer, insbesondere Förder-Band, durchgeführt wird
- auf dem auch die Detektion der Ist-Position des Artikels (A) durchgeführt wurde, oder
- welches stromabwärts, insbesondere unmittelbar stromabwärts, des Bandes, auf dem die Detektion der Ist-Position des Artikels (A) durchgeführt wurde, angeordnet ist.

4. Verfahren nach Anspruch 3,
**dadurch gekennzeichnet, dass**
beim Detektieren der Ist-Position des Artikels (A)
- auf dem ersten Band, dem Positionier-Band (17a), der Abförder-Einheit (17) die Positionskorrektur auf dem unmittelbar nachfolgenden zweiten Band (17b) durchgeführt wird, und ein Wiege-Band (WB) gegebenenfalls stromabwärts davon folgt,
- auf dem zweiten Band (17b), dem Abförder-Band (17b), der Abförder-Einheit (17) die Positionskorrektur auf demjenigen nächsten nachfolgenden Band durchgeführt wird, welches kein Wiege-Band (WB) ist.
(Quer-Position:)

5. Verfahren nach einem der vorhergehenden Ansprüche,
**dadurch gekennzeichnet, dass**
die Quer-Position des Artikels (A) um eine Querstrecke (Q) gesteuert verändert wird, indem das Band, auf dem er aufliegt
- entweder im Ganzen in Querrichtung (11) gesteuert um diese Querstrecke (Q) verlagert wird,
- oder Teile dieses Bandes um mehr als die Querstrecke (Q) in Querrichtung (11) verlagert werden, sodass der Artikel (A) um die Querstrecke (Q) verlagert wird.
(Drehlage:)

6. Verfahren nach einem der vorhergehenden Ansprüche,
**dadurch gekennzeichnet, dass**
die Drehlage des Artikels (A) um eine Hochachse gesteuert geändert wird, indem
- Teile dieses Bandes unterschiedlich schnell angetrieben werden, sodass der Artikel (A) um die Hochachse gedreht wird.
(Ursachenermittlung:)

7. Verfahren nach einem der vorhergehenden Ansprüche,
**dadurch gekennzeichnet, dass**
aus dem Maß der Abweichung von der Soll-Querposition und/oder der Soll-Drehlage und/oder der Soll-Längsposition der Bediener oder die Steuerung (1*), insbesondere eine künstliche Intelligenz in der Steuerung (1*), die Ursache der Abweichung erkennt oder ermittelt und automatisch die Ursache beseitigt, insbesondere
- die Drehzahl des Messers (3) ändert
und/oder
- das Messer (3) wechselt gegen ein anders gestaltetes Messer (3) und/oder
- einen oder mehrere Produktparameter vor dem Aufschneiden des Kalibers (K) ändert.
(Parameter-Erm ittlung:)

8. Verfahren nach Anspruch 7,
**dadurch gekennzeichnet, dass**
insbesondere für die Ermittlung der Ursache der Abweichung Parameter betreffend den Aufschneidevorgang ermittelt oder der Steuerung (1*) zur Verfügung gestellt werden, insbesondere
- Maschinen-Parameter, etwa
- Drehzahl des Messers (3) und/oder
- Lage der Messerachse (3') in deren Querrichtungen relativ zur Schneidbrille (5) und/oder
- Umfangskontur des Messers (3) und/oder
- Schneidwinkel des Messers (3) und/oder
- radiale Länge der Schneidfläche des Messers (3) und/oder
- Kaliber-Parameter, etwa
- Kerntemperatur des Kalibers (K) und/oder
- Oberflächentemperatur des Kalibers (K) und/oder
- Biegesteifigkeit des Kalibers (K) und/oder
- insbesondere um eine in der ersten Querrichtung (11) liegende Achse und/oder
- Salzgehalt des Kalibers (K) und/oder
- elektrische Leitfähigkeit des Kalibers (K).

9. Verfahren nach einem der vorhergehenden Ansprüche,
wobei das Positionieren der Scheibe (S) auch das Falten der Scheibe (S), insbesondere mittels einer gesteuert antreibbaren Faltwelle, umfasst **dadurch gekennzeichnet, dass**
- die Ist-Form der gefalteten Scheibe (S) auf der Abförder-Einheit (17) detektiert wird,
- die Ist-Form automatisch mit einer vorgegebenen Soll-Form verglichen wird,
- bei einer Diskrepanz, die über einem vorgegebenen Akzeptanz-Wert liegt, bei nachfolgenden Scheiben (S) oder Portionen (P) automatisch die Position der Faltwelle und/oder die Drehzahl der Faltwelle, geändert wird, insbesondere über die Zeit während des Faltvorganges unterschiedlich geändert wird,
- insbesondere bei einer mehrspurigen Aufschneide-Maschine (1) für jede Spur (SP1, SP2, SP3) separat mit einer separaten Faltwelle.

10. **Aufschneide-Maschine** (1), insbesondere Slicer (1), insbesondere zur Durchführung des Verfahrens nach einem der vorhergehenden Ansprüche, mit
- einer Schneideinheit (7),
- einer Zufuhreinheit (20) zum Zuführen des wenigstens einen Produkt-Kalibers (K) zu der Schneideinheit (7),
- einer Abförder-Einheit (17) zum Abfördern der von der Aufschneide-Maschine (1) abgetrennten Scheiben (S), insbesondere in Form von Portionen (P) aus mehreren Scheiben (S),
- umfassend zumindest ein erstes Band (17a), meist ein Portionier-Band (17a), ein zweites Band (17b), meist ein Abförder-Band (17 c), ein drittes Band (17c), meist ein Übergabe-Band (17c) sowie ein Wiege-Band (WB), wobei das Wiege-Band (WB) mit dem Abförder-Band oder dem Übergabe-Band (17b), funktionsvereinigt als ein Band ausgebildet sein kann, und wobei die Bänder in Durchlaufrichtung (10) hintereinander angeordnet sind,
- einer Kamera (22) zum Detektieren der Ist-Position des Artikels (A) auf der Abförder-Einheit (17),
- einer mit der Kamera (22) datentechnisch verbundenen Steuerung (1*) zur Steuerung beweglicher Teile der Aufschneide-Maschine (1),
**dadurch gekennzeichnet, dass**
- die Steuerung (1*) dazu ausgelegt und bestimmt ist, das Verfahren nach einem der vorhergehenden Ansprüche durchzuführen.

11. Aufschneide-Maschine (1) nach Anspruch 10,
**dadurch gekennzeichnet, dass**
- die Kamera (22) zum Detektieren der Position der Scheibe (S) oder Portion (P) auf das in Transportrichtung (10) erste (17a) und/oder zweite (17b) Band der Abförder-Einheit (17) gerichtet ist,
- im Fall des ersten Bandes (17a) das unmittelbar nachfolgende zweite Band (17b) ein Verlagerungs-Band (VB) ist, welches in der Lage ist, die Querposition und/oder die Drehlage eines darauf liegenden Artikels (A) zu verändern,
- im Fall des zweiten Bandes (17b)
- dieses zweite Band (17b) vorzugsweise das Wiege-Band (WB) ist und das Verlagerungs-Band (VB) das unmittelbar nachfolgende dritte Band (17c) ist,
- oder dieses zweite Band (17b) kein Wiege-Band (WB) ist, insbesondere das Wiege-Band (WB) das dritte Band (17c) ist und das Verlagerungs-Band (VB) das Band unmittelbar vor oder nach dem Wiege-Band (WB) ist.

12. Aufschneide-Maschine (1) nach einem der Ansprüche 10 oder 11, **dadurch gekennzeichnet, dass**
- die Steuerung (1*) in der Lage ist, aus Art und Maß der Abweichung die Ursache der Abweichung zu ermitteln und/oder
- die Maschine (1) mit der Steuerung (1*) datentechnisch verbundene Sensoren (25, 26, 27) umfasst, die in der Lage sind
- Maschinen-Parameter, etwa
- Drehzahl des Messers (3) und/oder
- Lage der Messerachse (3') in deren Querrichtungen relativ zur Schneidbrille (5) und/oder
- Umfangskontur des Messers (3) und/oder
- Schneidwinkel des Messers (3) und/oder
- radiale Länge der Schneidfläche des Messers (3)
und/oder
- Kaliber-Parameter, etwa
- Kerntemperatur des Kalibers (K) und/oder
- Oberflächentemperatur des Kalibers (K) und/oder
- Biegesteifigkeit des Kalibers (K) des Kalibers (K) und/oder
- insbesondere um eine in der ersten Querrichtung (11) liegende Achse und/oder
- Salzgehalt des Kalibers (K) und/oder
- elektrische Leitfähigkeit des Kalibers (K)
zu ermitteln.

13. Aufschneide-Maschine (1) nach einem der Ansprüche 10 bis 12,
**dadurch gekennzeichnet, dass**
das Verlagerungs-Band (VB)
- entweder als Band in einer insgesamt quer verlagerbaren Band-Kassette (23) angeordnet ist,
- oder ein Riemen-Förderband ist, dessen Riemen (24) einzeln und unabhängig voneinander hinsichtlich ihrer Laufgeschwindigkeit ansteuerbar sind und/oder deren Umlenkrollen einzeln und unabhängig voneinander in Querrichtung (11) verlagerbar sind.

14. Aufschneide-Maschine (1) nach einem der Ansprüche 10 bis 13,
**dadurch gekennzeichnet, dass**
eine quer verlagerbare Band-Kassette (23) mit darin angeordnetem Förderband oder eine einzelne Umlenk-Walze eines Förderbandes der Abförder-Einheit (17) in Querrichtung (11) mittels eines gesteuert antreibbaren Kurbeltriebes (28+29) entlang von Querführungen (23a, b) verlagerbar ist.

15. Aufschneide-Maschine (1) nach einem der Ansprüche 10 bis 14,
wobei die Maschine (1) eine Falt-Einheit mit einer gesteuert antreibbaren Faltwelle umfasst,
**dadurch gekennzeichnet, dass**
- ein Sensor (26), insbesondere eine Kamera, so ausgebildet ist, dass sie in der Lage ist, die Ist-Form einer gefalteten Scheibe (S) auf der Abförder-Einheit (17) zu ermitteln,
- die Steuerung (1*) so ausgebildet ist, dass sie in der Lage ist, die Ist-Form der gefalteten Scheibe (S) mit einer vorgegebenen Soll-Form zu vergleichen, insbesondere mittels künstlicher Intelligenz, und
- bei einer Diskrepanz, die über einem vorgegebenen Akzeptanz-Wert liegt, die Drehzahl und/oder Position der Faltwelle bei den nachfolgenden Scheiben (S) oder Portionen (P), insbesondere über die Zeit unterschiedlich während des Falt-Vorganges, so zu steuern, dass die Ist-Form der gewünschten Soll-Form entspricht,
- insbesondere separat an jeder Spur (SP1, SP2, SP3) einer mehrspurigen Aufschneide-Maschine (1).
